# EUROPEAN PATENT SPECIFICATION

(11) **EP 1 254 297 B1**
(45) Date of publication and mention of the grant of the patent: **18.04.2007**
(21) Application number: 01908109.0
(22) Date of filing: 25.01.2001
(51) Int. Cl.: E05F 11/38

(54) **A GLAZING WITH A MECHANICAL MEMBER BONDED THERETO**
GLASSCHEIBE MIT EINEM DAZU ADDIERTEN MECHANISCHEN TEIL
VITRAGE ET ELEMENT MECANIQUE FIXE A CE DERNIER

(30) Priority: 25.01.2000 EP 00830042
(43) Date of publication of application: 06.11.2002
(73) Proprietor: Pilkington Italia S.p.A., 66050 San Salvo (CH) (IT)
(72) Inventor: CAPRIOTTI, Luigi, I-63039 S. Benedetto del Tronto (IT); PAUDICE, Ciro, I-66054 Vasto (IT)
(74) Representative: Pettet, Nicholas Edward
(86) International application number: PCT/IT2001/000037
(87) International publication number: WO 2001/055542

(56) References cited:
- EP-A- 0 368 728
- DE-A- 4 336 107
- US-A- 4 788 795
- US-A- 5 765 310

## Description

The present invention relates to a glazing with a mechanical member bonded to it. The mechanical member may be a means, such as a bracket, for attaching the glazing to a larger mechanism or assembly, such as a window-opening mechanism. The mechanical member may serve to attach an item of equipment to the glazing. The glazing may be for a vehicle window such as a rear window, door window or other side window, windscreen or rooflight.

It is known practice for glazing manufacturers to bond mechanical members to the glazing with adhesive, usually as one of the final steps in the manufacture of the glazing, and shortly before the glazing is despatched to the customer, who is typically a vehicle manufacturer. Not surprisingly, each customer has a preferred design of bracket, pin, clip, spacer, lug or other mechanical member, and frequently such components are also specific to particular models of vehicle assembled by the customer.

For instance, US-A-5,765,310 discloses a frangible window panel mounting system for mounting an automotive window panel onto a window regulating mechanism. The system includes a U-shaped spring clip having a mounting flange for attaching the window panel to the window regulating mechanism.

EP-A2-368 728 discloses a glazing pane having a metal element bonded to the pane by adhesive. The pane has at least one hole passing through the pane in the zone covered by the adhesive so that the adhesive enters the hole and provides a supplementary mechanical anchorage. Some embodiments of the invention may have a thin plate bonded to the pane on the opposite side to the metal element to hide the adhesive.

In modern glazing factories it is standard practice for the operation of bonding a mechanical member to a glazing to be carried out by one or more robots, or with the assistance of other dedicated machinery. Consequently, in order to change a production line over from the production of a particular glazing to a differing glazing (e.g. one for a different model of vehicle, or for a different customer), it is generally necessary to change the tooling on the robot or other machinery, and quite possibly change the control programme as well. The tooling to be changed may for example include storage magazines for the mechanical members and grippers for handling the members. Other items such as transport stillages and packing spacers may also need to be changed to accommodate glazings with a different mechanical member attached. Clearly, the more equipment that must be changed, the longer the changeover will take, and the consequent downtime will contribute to higher costs.

Many of these mechanical members protrude significantly from the glazing. This causes difficulty in handling, with the possibility of damage, either to the member or to surrounding objects, in particular, other glazings. It also causes difficulties in packing, reducing the packing density (i.e. the number of glazings that can be packed in a particular space, e.g. per stillage) and requiring bulky spacing material, again adding to costs.

It would be desirable to alleviate the above problems associated with mechanical members as they are presently used. It has now been realised that this can be achieved by providing the mechanical member in two parts, a base part of universal applicability, and a second part which is specific to the requirements of the customer or glazing concerned.

According to the present invention there is provided a vehicle door glazing with a door glazing bracket attached thereto, characterised in that:
the door glazing bracket comprises a first or base part bonded to the glazing by adhesive,
and a second part which engages with the first part, and is maintained in position by engagement with the first part, wherein the first part is a standardised design usable with several differing designs of second part.

The standardised base can be bonded in the appropriate position(s) to all glazings which require one or more door glazing brackets to be attached, and the appropriate second part engaged with it (either before or after bonding of the base). The second part is a bracket which is adapted for a particular customer or vehicle model.

Use of a standardised base obviates the need to change tooling (which is specific to the design of base) on robots or other machinery, with consequent time and cost savings on changeovers. Furthermore, the second part of the bracket need not be attached until after transport of the glazings to the customer's premises. As the standardised base may be of a generally thin, flat design, the problem of the bracket protruding from the glazing and causing damage, or being damaged, is also obviated.

Preferably, the first part of the bracket is in the form of a thin disc, and the second part has a hole of generally corresponding size and shape so that one part may receive the other part. This reduces the first part to the simplest possible design of broadest applicability, while facilitating packing of the glazings as described above.

Alternatively, the first part may extend over the edge of the glazing, and the second part is attached to the first part in such a way that the second part does not extend over any part of the glazing.

The invention also provides a method of making a vehicle door glazing with a door glazing bracket attached thereto,
characterised by the steps of:
(a) providing a pane of glazing material, and a door glazing bracket comprising a first or base part of a standardised design and a second part which is one of several differing designs of second part, the first part being usable with the differing designs of second part,
(b) applying adhesive to the pane or the first part of the door glazing bracket,
(c) positioning the first part on the pane, and maintaining it in position until the adhesive has partially cured, and
(d) engaging the second part of the door glazing bracket with the first part so as to maintain the second part in position,
wherein step (d) may be performed before or after step (c).

The invention will now be further described by way of the following specific embodiments, which are given by way of illustration and not of limitation, with reference to the accompanying drawings in which:
Fig. 1 shows a glazing with two door glazing brackets attached;
Fig. 2 is an enlargement of a small part of the glazing of Fig. 1, showing one of the brackets in a disassembled condition;
Fig. 3 is a cross-sectional view corresponding to Fig. 2, and taken on the line III-III in Fig. 2;
Fig. 4 shows a small part of a glazing with a second embodiment of door glazing bracket bonded to it;
Fig. 5 is a cross-sectional view corresponding to Fig. 4, and taken on the line V-V in Fig. 5;
Fig. 6 is a cross-sectional view of a third embodiment of door glazing bracket;
Fig. 7 shows a small part of a glazing together with a fourth embodiment of door glazing bracket in a disassembled condition;
Fig. 8 is a cross-sectional view of the fourth embodiment of bracket, with the relative positions of the parts changed in comparison with Fig. 7.

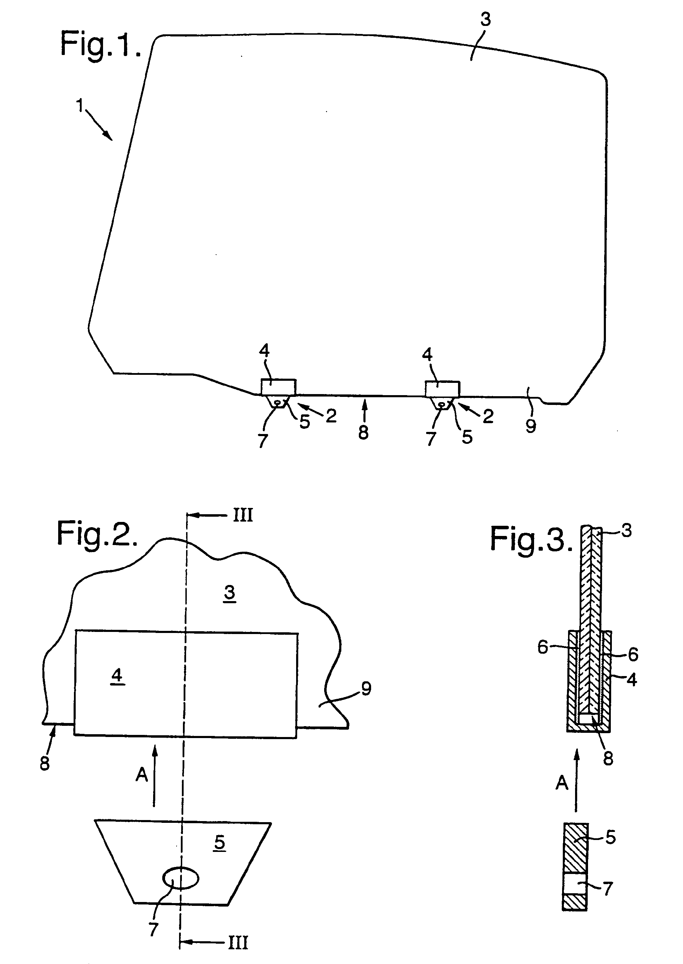

with reference to Fig. 1, there is shown a glazing 1 which is a door glazing for an automotive vehicle, e.g. a passenger car. The door glazing slides vertically in a door frame (not shown), and as is well-known, its vertical position and movement are controlled by a window winding mechanism (not shown), which in the past was operated manually, but is nowadays often driven by an electric motor- The door glazing is attached to the winding mechanism by means of mechanical members in the form of door glazing brackets 2.

The glazing 1 comprises a pane 3 of sheet glazing material, which may be safety glass, i.e. toughened glass or laminated glass, or a plastics material such as polycarbonate, or indeed a composite of both glass and plastics glazing materials.

Figures 2 and 3 show the bracket in more detail and in disassembled condition. It comprises a first or base part 4, which is bonded to the glazing by adhesive 6, and a second part 5. The base part 4 is of a standardised design which may be used on all door glazings produced by a particular glass manufacturer. For instance, the base part shown is of generally rectangular shape in side view, with a U-shaped cross-section. The design of the second part may even be specific to a particular vehicle model assembled by the customer, or a model for a particular market. Aspects of the second part 5 of the bracket which may vary from glazing to glazing (according to customer, etc., as described above) are e.g. its size, shape, thickness or the position of hole 7 for attaching the bracket to the winding mechanism.

The second part 5 of the bracket 2 engages with the first part 4 and is thus maintained in position relative to the glazing. Frequently the second part 5 will simply be attached to the first part 4. In the present embodiment, the first and second parts may clip together, or screws or other conventional fixings may be used to engage the second part with the first part. Details of the engaging mechanism are not shown in figures 2 and 3; engagement is shown diagrammatically by arrow A. The first part 4 extends over the edge 8 and peripheral region 9 of the glazing, and the second part 5 is attached to the first part so as to depend from it, and consequently the second part 5 does not extend over any part of the glazing. While Fig. 3 shows part of a pane 3 of laminated glass, it could equally well be toughened glass. When assembling the glazing, adhesive may be applied to either the pane or the U-shaped base part 4. The second part may be attached in either the glazing manufacturer's factory or the customer's factory.

While the base part 4 of the first embodiment is usable with a wide variety of second parts 5 to provide a door glazing bracket, the concept of a universal base part can be developed further to provide a base part suitable for use with other types of mechanical member being e.g. centring or fixing pins, retaining clips, locating lugs, spacers or attachment studs, in short, with any of the small items of hardware which are generally attached to automotive glass.

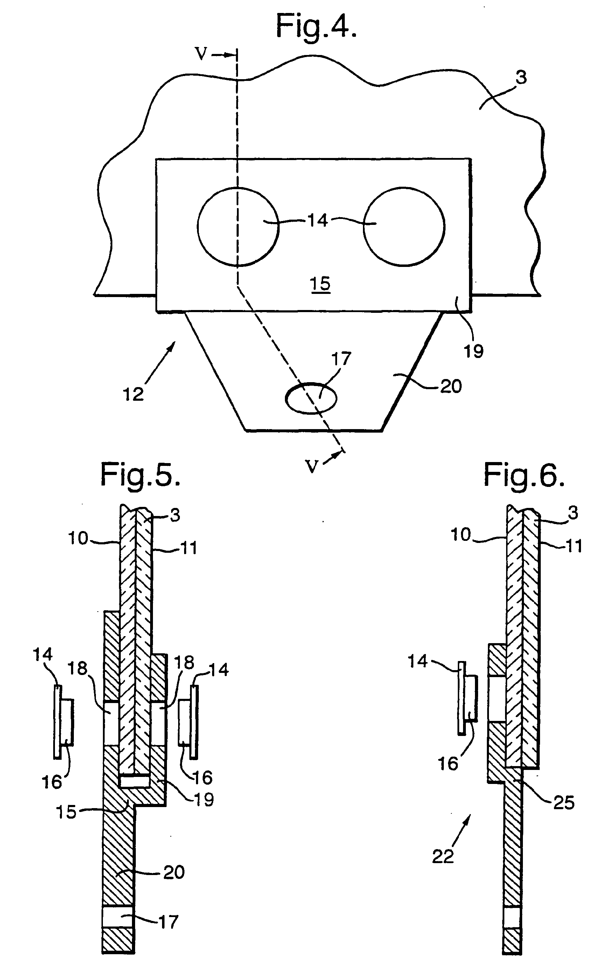

Figures 4 and 5 show a second embodiment of the invention, in which the first or base part has been reduced to a single shape, namely a thin disc or flat cylinder. Fig. 4 shows a small part of a glazing pane 3 with a modified mechanical member 12 attached. The member again serves as a door glazing bracket, and comprises a first or base part 14 and a second part 15; in this case there are two first parts 14. The second part 15 has holes 18 (Fig. 5) of size and shape generally corresponding to the first parts 14 so that the second part 15 may receive the first parts 14. The second part is again provided with a hole 17 to permit attachment to a window winding mechanism. In this embodiment the second part 15 comprises an upper portion 19 of generally U-shaped cross-section for receiving the periphery of the pane, and a lower portion 20 which extends below the pane. As shown in Fig. 5, the pane 3 of glazing material has two major faces 10, 11 and at least one first part 14 is applied to each major face to maintain the second part in position.

During assembly, the second part 15 is positioned on the cleaned glazing first. Adhesive 16 is either injected onto the glazing through the holes 18, or, preferably (and as illustrated) applied to the first parts 14 which are then inserted into the holes 18. More preferably, the adhesive is pre-applied to the first parts, i.e. it is applied to them at an earlier time or date, possibly in a different location. Solid adhesive may be pre-shaped to suit the first part before application. Most conveniently, the first parts are bought from a supplier with a tack-free adhesive pre-applied; a suitable supplier is A. Raybond SARL of 68300 Saint-Louis, France.

The term "tack-free" refers to a solid adhesive which is not sticky to the touch, thereby facilitating handling. Such adhesives only become sticky after activation, and this term refers to any process which makes a tack-free adhesive sticky, initiating the bonding process. Activation also refers to the initiation of curing in a previously inert adhesive; it may involve melting the adhesive (at least on its surface), initiating a heat-dependent chemical reaction, or removing or destroying a barrier which separates two reactants. Activation may be carried out just before, or after, the insertion of the first parts in the holes.

A preferred adhesive for the present application is a polyurethane-based composition such as Techbond PUR from A. Raybond SARL. In this type of composition, the polyol and isocyanate reactants are pre-mixed in stoichiometric ratio, but the isocyanate is "end capped" or micro-encapsulated to prevent contact with the polyol. Application of heat activates the adhesive by destroying, e.g. melting, the capping or encapsulating membrane and allowing the isocyanate component into contact with the surrounding polyol so that the curing reaction starts. This adhesive does not require a primer.

With this type of adhesive, initial bond strength sufficient to hold the bracket in position is rapidly developed as the adhesive cools, possibly in less than 1 minute. Depending on the composition, full strength is developed within 30 minutes, 1 hour, or 3 to 5 hours, but this can occur while the glazings are in transit to the customer's premises.

Fig. 6 shows a third embodiment of bracket which is closely related to the second embodiment. Such is the strength of certain adhesives that half (i.e. one limb) of the U-shaped upper portion 19 of the second embodiment may be dispensed with. Accordingly, Figure 6 shows a bracket 22 comprising a first part 14 (it being the same as in the second embodiment), and a single-limbed second part 25, which extends over only one major face 10 of the pane 3. Other aspects of the third embodiment are the same as for the second embodiment.

While the universally applicable base parts in the form of adhesive discs of the second embodiment are easy and convenient to use, that design of mechanical member or bracket does not allow the attachment of the second part to be delayed until, e.g. after delivery of the glazing, which was possible with the first embodiment. However, further modification of the third or "single limb" embodiment does render this possible.

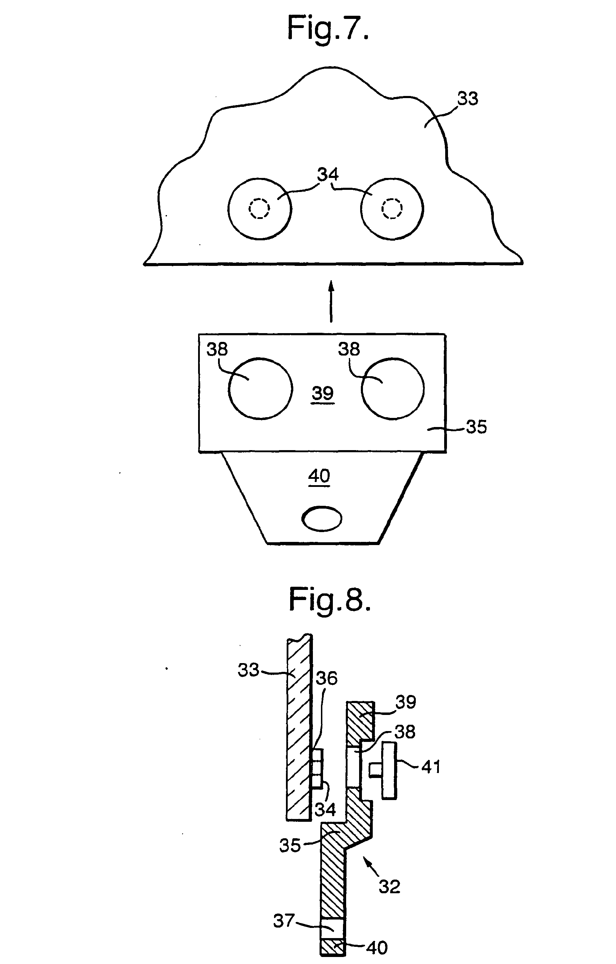

Accordingly, Figs. 7 and 8 illustrate a fourth embodiment of the invention which again utilises first or base parts in the form of adhesive discs, albeit slightly modified, and allows the fitting of the second part to be delayed. In this embodiment, a third or fixing part 41 (Fig. 8) attaches to the first or base part 34 to hold the second part 35 in place. The third part 41 may clip to the first part 34, or the parts may be threaded so that the third part is screwed into the first part. Thus the second part is maintained in position by the mutual engagement of the first and third parts. As before, the second part 35 has an upper portion 39 and a lower portion 40, which is provided with a hole 37 for attachment of the bracket to the window winding mechanism.

To assemble the fourth embodiment of mechanical member 32, the first or base parts 34 are provided, preferably with tack-free, shaped, solid adhesive pre-applied as described above, and bonded to the pane 33. One, two or more base parts may be used according to the size of the mechanical member and the load it may experience in use. Pane 33 has been shown as a monolithic pane of toughened glass, but it could equally well be laminated glass.

Bonding the base parts 34 to the pane 33 generally involves loading a supply of the base parts into the magazine of an applicator machine or robot which heats, positions, and applies the base parts to the pane. A temperature in the range 100°-140°C is suitable. The pane is supported on a suitable fixture, having been cleaned with isopropyl alcohol, Betaseal VP-04604 or other suitable cleaning agent. Further heating may be applied to the base parts to accelerate curing. Suitable rapid heating techniques include infra-red lamp, hot air jets, inductive heating or radio-frequency dielectric heating. With Techbond PUR, 30-50% of bonding strength may be attained in 5-40 seconds from first heating. Consequently, it is also possible to rapidly cool the base parts to 60°-80°C with a fan to allow immediate handling or packing of the glazings. Full strength is achieved when post-polymerisation is complete, which may take from 20 seconds to 5 seconds.

The second part 35 may be attached in the glazing manufacturer's factory or at the customer's premises. It is fitted onto and engaged with the first parts 34, and the third or fixing parts 41 are screwed into the first parts 34 so as to maintain the second part in position. In effect the third or fixing parts 41 are short bolts with large, flat heads. All these parts may be moulded in standard engineering plastics, or machined in metal for greater strength. In this and earlier embodiments, the first or base parts in the form of thin discs or flat cylinders with similarly-shaped adhesive pre-applied may be thought of as adhesive versions of press-studs. They are quick and simple to apply, and permit rapid, clean, economical and effective bonding of a wide variety of minor hardware components to glass and other sheet glazing materials.

The invention allows a faster production cycle, with reduced changeover times when changing the production line over to a differing glazing. It makes packing the glazings simpler and more efficient, and reduces the possibility of damage. The use of solid tack-free adhesive avoids the need for handling or storage of dangerous chemicals such as adhesive reactants or primers. Poor adhesion due to bad priming operations or adverse influence of the environment (temperature, humidity) is alleviated.

Further adhesives which may be preferred in these other applications include moisture-cured polyurethane (e.g. Betaseal HV3 available from Gurit-Essex AG of Freienbach, Germany), moisture/heat cured polyurethane (e.g. Sika 360 HC available from Sika AG of Switzerland), reactive hot melt polyurethane (e.g. PUR-FECT 310 available from. National Starch &Chemical Company of Bridgewater, New Jersey, USA, a member of the ICI Group), and further two component polyurethanes. A further suitable class of adhesives is that of epoxy based compositions, e.g. Raybond's Techbond EPO. Also suitable are structural adhesive tapes (e.g. 3M 9214 available from the Minnesota Mining and Manufacturing Company of St. Paul, Minnesota, USA)

## Claims

1. A vehicle door glazing (1) with a door glazing bracket (2; 12; 22; 32) attached thereto, **characterised in that**:
the door glazing bracket comprises a first or base part (4; 14; 34) bonded to the glazing by adhesive (6; 16; 36),
and a second part (5; 15; 25; 35) maintained in position by engagement with the first part, wherein the
first part is a standardised design usable with several differing designs of second part.

2. A glazing as claimed in claim 1, wherein the first part is generally in the form of a thin disc (14; 34), and the second part (15; 25; 35) has a hole (18; 38) of generally corresponding size and shape so that one part may receive the other part.

3. A glazing as claimed in claim 1, wherein the first part extends over the edge of the glazing, and the second part is attached to the first part in such a way that the second part does not extend over any part of the glazing.

4. A glazing as claimed in any preceding claim, wherein a third part (41) attaches to the first part so as to hold the second part in place.

5. A glazing as claimed in claim 4, wherein the third part clips onto the first part.

6. A glazing as claimed in claim 4, wherein the first and third parts are provided with matching screw threads, so that the third part is screwed into the first part.

7. A glazing, as claimed in any preceding claim, comprising a pane of glazing material (3) having two major faces (10; 11), and at least one first part is applied to each major face.

8. A glazing as claimed in any preceding claim, wherein the adhesive is activated by heat.

9. A method of making a vehicle door glazing (1) with a door glazing bracket (2; 12; 22; 32) attached thereto, **characterised by** the steps of:
(a) providing a pane of glazing material (3), and a door glazing bracket comprising a first or base part (4; 14; 34) of a standardised design and a second part (5; 15; 25, 35) which is one of several differing designs of second part, the first part being usable with the differing designs of second part,
(b) applying adhesive (6; 16; 36), to the pane or the first part of the door glazing bracket,
(c) positioning the first part on the pane, and maintaining it in position until the adhesive has partially cured, and
(d) engaging the second part of the door glazing bracket with the first part so as to maintain the second part in position,
wherein step (d) may be performed either before or after step (c).

10. A method of making a vehicle door glazing (1) with a door glazing bracket (2; 12; 22; 32) attached thereto, comprising an assembly operation **characterised by** the steps of:
(a) providing a pane of glazing material (3), and a door glazing bracket comprising a first or base part (4; 14; 34) of a standardized design and a second part (5; 15; 25; 35) which is one of several differing designs of second part, the first part being usable with the differing designs of second part; adhesive (6; 16; 36) having been pre-applied to the first part,
(b) positioning the first part on the pane, and maintaining it in position until the adhesive has partially cured, and
(c) engaging the second part of the door glazing bracket with the first part so as to maintain the second part in position,
wherein step (b) may be performed either before or after step (c).

11. A method as claimed in claim 9 or 10, wherein the first part is in the form of a thin disc (14; 34), and the second part (15; 25; 35) has a hole (18; 38) of generally corresponding size and shape so that one part may receive the other part.

12. A method as claimed in anyone of claim 9 to 11, wherein the adhesive cures fully within 1 hour, preferably within 30 minutes.

13. A method as claimed in any one of claims 9 to 12, wherein the adhesive is in the form of a tack-free tablet.

14. A method as claimed in any one of claims 9 to 13, wherein the adhesive is solid and is pre-shaped to suit the first part.

15. A method as claimed in any one of claims 9 to 14, including heating the adhesive to activate it before positioning the first part on the pane.

16. A method as claimed in any one of claims 9 to 15, including heating the adhesive to cure it, after positioning the first part on the pane.

17. A method as claimed in any one of claims 9 to 16, including transporting the glazing to a customer's premises, wherein the second part of the door glazing bracket is attached to the first part at the customer's premises.

## Patentansprüche

1. Fahrzeugtürglasscheibe (1) mit einer daran befestigten Türscheibenklammer (2; 12; 22; 32), **dadurch gekennzeichnet, dass** die Türscheibenklammer ein durch einen Klebstoff (6; 16; 36) mit der Glasscheibe verbundenes erstes bzw. Basisteil (4; 14; 34)
und ein durch einen Eingriff mit dem ersten Teil in seiner Position gehaltenes zweites Teil (5; 15; 25; 35) umfasst, wobei
das erste Teil eine standardisierte Konstruktion ist, die mit mehreren zweiten Teilen unterschiedlicher Konstruktion verwendet werden kann.

2. Glasscheibe nach Anspruch 1, bei der das erste Teil allgemein die Form einer dünnen Platte (14; 34) hat und das zweite Teil (15; 25; 35) ein Loch (18; 38) von allgemein entsprechender Größe und Form aufweist, so dass ein Teil das andere Teil aufnehmen kann.

3. Glasscheibe nach Anspruch 1, bei der sich das erste Teil über die Kante der Glasscheibe erstreckt und das zweite Teil so am ersten Teil befestigt ist, dass sich das zweite Teil über keinen Teil der Glasscheibe erstreckt.

4. Glasscheibe nach einem der vorhergehenden Ansprüche, bei der ein drittes Teil (41) so am ersten Teil befestigt ist, dass es das zweite Teil in seiner Position hält.

5. Glasscheibe nach Anspruch 4, bei der das dritte Teil auf das erste Teil gesteckt wird.

6. Glasscheibe nach Anspruch 4, bei der das erste und das dritte Teil mit zusammenpassenden Schraubgewinden versehen sind, so dass das dritte Teil in das erste Teil geschraubt wird.

7. Glasscheibe nach einem der vorhergehenden Ansprüche, die eine Scheibe aus einem Verglasungsmaterial (3) mit zwei Hauptflächen (10; 11) umfasst, wobei mindestens ein erstes Teil an jeder Hauptfläche angebracht ist.

8. Glasscheibe nach einem der vorhergehenden Ansprüche, bei der der Klebstoff durch Wärme aktiviert wird.

9. Verfahren zur Herstellung einer Fahrzeugtürglasscheibe (1) mit einer daran befestigten Türscheibenklammer (2; 12; 22; 32), **gekennzeichnet durch** die Schritte:
(a) der Bereitstellung einer Scheibe aus einem Verglasungsmaterial (3) und einer Türscheibenklammer, die ein erstes oder Basisteil (4; 14; 34) mit einem standardisierten Aufbau und ein zweites Teil (5; 15; 25; 35) umfasst, das eines von mehreren zweiten Teilen mit unterschiedlichem Aufbau ist, wobei das erste Teil mit den zweiten Teilen unterschiedlicher Konstruktion verwendbar ist,
(b) des Aufbringens eines Klebstoffs (6; 16; 36) auf die Scheibe bzw. das erste Teil der Türscheibenklammer,
(c) der Positionierung des ersten Teils an der Scheibe und seines Haltens in seiner Position bis zum teilweisen Abbinden des Klebstoffs und
(d) des Herstellens eines Eingriffs des zweiten Teils der Türscheibenklammer mit dem ersten Teil zum Halten des zweiten Teils in seiner Position,
wobei der Schritt (d) vor oder nach dem Schritt (c) ausgeführt werden kann.

10. Verfahren zur Herstellung einer Fahrzeugtürglasscheibe (1) mit einer daran befestigten Türscheibenklammer (2; 12; 22; 32), **gekennzeichnet durch** die Schritte:
(a) der Bereitstellung einer Scheibe aus einem Verglasungsmaterial (3) und einer Türscheibenklammer, die ein erstes oder Basisteil (4; 14; 34) mit einem standardisierten Aufbau und ein zweites Teil (5; 15; 25; 35) umfasst, das eines von mehreren zweiten Teilen mit unterschiedlichem Aufbau ist, wobei das erste Teil mit zweiten Teilen unterschiedlicher Konstruktion verwendet werden kann und vorab Klebstoff (6; 16; 36) auf das erste Teil aufgebracht wurde,
(b) der Positionierung des ersten Teils an der Scheibe und seines Haltens in seiner Position bis zum teilweisen Abbinden des Klebstoffs und
(c) des Herstellens eines Eingriffs des zweiten Teils der Türscheibenklammer mit dem ersten Teil zum Halten des zweiten Teils in seiner Position,
wobei der Schritt (b) vor oder nach dem Schritt (c) ausgeführt werden kann.

11. Verfahren nach Anspruch 9 oder 10, bei dem das erste Teil die Form einer dünnen Platte (14; 34) hat und das zweite Teil (15; 25; 35) ein Loch (18; 38) von allgemein entsprechender Größe und Form aufweist, so dass ein Teil das andere Teil aufnehmen kann.

12. Verfahren nach einem der Ansprüche 9 bis 11, bei dem der Klebstoff innerhalb einer Stunde, vorzugsweise innerhalb von 30 Minuten vollständig abbindet.

13. Verfahren nach einem der Ansprüche 9 bis 12, bei dem der Klebstoff die Form eines nicht haftenden Plättchens aufweist.

14. Verfahren nach einem der Ansprüche 9 bis 13, bei dem der Klebstoff fest und passend zum ersten Teil vorgeformt ist.

15. Verfahren nach einem der Ansprüche 9 bis 14, das das Erwärmen des Klebstoffs zu seiner Aktivierung vor der Positionierung des ersten Teils auf der Scheibe umfasst.

16. Verfahren nach einem der Ansprüche 9 bis 15, das die Erwärmung des Klebstoffs zum Veranlassen seines Abbindens nach der Positionierung des ersten Teils auf der Scheibe umfasst.

17. Verfahren nach einem der Ansprüche 9 bis 16, das den Transport der Glasscheibe auf das Gelände eines Kunden umfasst, wobei das zweite Teil der Türscheibenklammer auf dem Gelände des Kunden am ersten Teil befestigt wird.

## Revendications

1. Vitrage de portière de véhicule (1) avec un support de vitrage de portière (2 ; 12 ; 22 ; 32) fixé à celui-ci, **caractérisé en ce que** :
le support de vitrage de portière comprend une première partie ou partie de base (4 ; 14 ; 34) liée au vitrage par adhésif (6 ; 16 ; 36),
et une deuxième partie (5 ; 15 ; 25 ; 35) maintenue en position par mise en prise avec la première partie, la première partie étant une conception normalisée utilisable avec plusieurs conceptions différentes de la deuxième partie.

2. Vitrage selon la revendication 1, dans lequel la première partie est globalement sous forme d'un disque mince (14 ; 34), et la deuxième partie (15; 25; 35) comporte un trou (18 ; 38) de taille et de forme globalement correspondantes de sorte qu'une partie peut recevoir l'autre partie.

3. Vitrage selon la revendication 1, dans lequel la première partie s'étend sur le bord du vitrage, et la deuxième partie est fixée à la première partie de sorte que la deuxième partie ne s'étende sur aucune partie du vitrage.

4. Vitrage selon l'une quelconque des revendications précédentes, dans lequel une troisième partie (41) se fixe à la première partie de manière à maintenir la deuxième partie en place.

5. Vitrage selon la revendication 4, dans lequel la troisième partie s'attache à la première partie.

6. Vitrage selon la revendication 4, dans lequel les première et troisième parties sont munies de filetages de vis correspondants, de manière à ce que la troisième partie soit vissée à la première partie.

7. Vitrage selon l'une quelconque des revendications précédentes, comprenant un carreau de matériau de vitrage (3) ayant deux faces principales (10 ; 11), et au moins une première partie est appliquée à chaque face principale.

8. Vitrage selon l'une quelconque des revendications précédentes, dans lequel l'adhésif est activé par la chaleur.

9. Procédé de fabrication d'un vitrage de portière de véhicule (1) avec un support de vitrage de portière (2 ; 12 ; 22 ; 32) fixé à celui-ci, **caractérisé par** les étapes consistant à :
(a) prévoir un carreau de matériau de vitrage (3), et un support de vitrage de portière comprenant une première partie ou partie de base (4 ; 14 ; 34) d'une conception normalisée et une deuxième partie (5 ; 15 ; 25 ; 35) qui est l'une parmi plusieurs conceptions différentes de la deuxième partie, la première partie étant utilisable avec les conceptions différentes de la deuxième partie,
(b) appliquer un adhésif (6 ; 16 ; 36) au carreau ou à la première partie du support de vitrage de portière,
(c) positionner la première partie sur le carreau, et la maintenir en position jusqu'à ce que l'adhésif soit partiellement durci, et
(d) mettre en prise la deuxième partie du support de vitrage de portière avec la première partie de manière à maintenir la deuxième partie en position,
dans lequel l'étape (d) peut être réalisée avant ou après l'étape (c).

10. Procédé de fabrication d'un vitrage de portière de véhicule (1) avec un support de vitrage de portière (2 ; 12 ; 22 ; 32) fixé à celui-ci, comprenant une opération d'assemblage **caractérisée par** les étapes consistant à :
(a) prévoir un carreau de matériau de vitrage (3) et un support de vitrage de portière comprenant une première partie ou partie de base (4 ; 14 ; 34) d'une conception normalisée et une deuxième partie (5 ; 15 ; 25 ; 35) qui est l'une parmi plusieurs conceptions différentes de la deuxième partie, la première partie étant utilisable avec les conceptions différentes de la deuxième partie ; un adhésif (6 ; 16 ; 36) ayant été préappliqué à la première partie,
(b) positionner la première partie sur le carreau, et la maintenir en position jusqu'à ce que l'adhésif soit partiellement durci, et
(c) mettre en prise la deuxième partie du support de vitrage de portière avec la première partie de manière à maintenir la deuxième partie en position,
dans lequel l'étape (b) peut être réalisée avant ou après l'étape (c).

11. Procédé selon la revendications 9 ou 10, dans lequel la première partie est sous forme d'un disque mince (14 ; 34), et la deuxième partie (15 ; 25 ; 35) comporte un trou (18 ; 38) de taille et de forme globalement correspondantes de sorte qu'une partie peut recevoir l'autre partie.

12. Procédé selon l'une quelconque des revendications 9 à 11, dans lequel l'adhésif durcit complètement en 1 heure, de préférence en 30 minutes.

13. Procédé selon l'une quelconque des revendications 9 à 12, dans lequel l'adhésif est sous forme d'une pastille sèche non poisseuse.

14. Procédé selon l'une quelconque des revendications 9 à 13, dans lequel l'adhésif est solide et est préformé de manière à s'adapter à la première partie.

15. Procédé selon l'une quelconque des revendications 9 à 14, comprenant le chauffage de l'adhésif afin de l'activer avant le positionnement de la première partie sur le carreau.

16. Procédé selon l'une quelconque des revendications 9 à 15, comprenant le chauffage de l'adhésif afin de le durcir, après le positionnement de la première partie sur le carreau.

17. Procédé selon l'une quelconque des revendications 9 à 16, comprenant le transport du vitrage chez un client, la deuxième partie du support de vitrage de portière étant fixée à la première partie chez le client.
